# FASCICULE DE BREVET EUROPEEN

(11) **EP 1 165 303 B1**
(45) Date de publication et mention de la délivrance du brevet: **04.04.2007**
(21) Numéro de dépôt: 00905124.4
(22) Date de dépôt: 14.02.2000
(51) Int. Cl.: B29C 49/42, B29C 49/64

(54) **DISPOSITIF DE TRANSPORT DE PREFORMES COMPORTANT DES MOYENS DE PREHENSION PERFECTIONNES**
VORRICHTUNG ZUM TRANSPORTIEREN VON VORFORMLINGEN MIT VERBESSERTEN GREIFMITTELN
DEVICE FOR CARRYING PREFORMS COMPRISING IMPROVED GRIPPING MEANS

(30) Priorité: 18.02.1999 FR 9902586
(43) Date de publication de la demande: 02.01.2002
(73) Titulaire: SIDEL, 76053 Le Havre Cedex (FR)
(72) Inventeur: PELLEGATTA, Jean-Louis Sidel, 76053 Le Havre Cedex (FR)
(74) Mandataire: Siloret, Patrick
(86) Numéro de dépôt international: PCT/FR2000/000354
(87) Numéro de publication internationale: WO 2000/048819

(56) Documents cités:
- WO-A-89/00140
- US-A- 4 086 999
- US-A- 5 322 651

## Description

L'invention se rapporte au domaine des procédés de fabrication de corps creux en matériau thermoplastique dans lesquels on fabrique d'abord une préforme par injection avant d'obtenir le récipient final au cours d'une étape de soufflage.

La préforme obtenue par injection présente généralement un corps cylindrique tubulaire qui est fermé à l'une de ses extrémités axiales et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à l'opération de soufflage.

Pour pouvoir procéder à cette opération de soufflage, il est nécessaire que le corps de la préforme soit porté à une température supérieure à la température de transition vitreuse du matériau. A cet effet, on procède à un conditionnement thermique de la préforme en la faisant circuler à l'intérieur d'un four. Le four comporte des moyens de chauffage qui sont par exemple formés de lampes à infrarouge devant lesquelles la préforme est déplacée par un dispositif de transport.

Toutefois, au cours du transport de la préforme à l'intérieur du four, il faut veiller à ce que le col de la préforme soit chauffé le moins possible car on souhaite qu'il ne soit pas déformé puisqu'il présente déjà sa forme définitive. Pour ce faire, il est connu de disposer dans le four, le long du parcours de la préforme, deux rampes de protection qui sont agencées de part et d'autre de la préforme, juste au niveau de la limite entre son col et son corps. De la sorte, les rampes forment un écran et les lampes ne peuvent pas émettre de rayonnements directement en direction du col de la préforme.

Cependant, du fait que les rayonnements émis par les lampes se propagent dans toutes les directions, il est apparu qu'une partie des rayonnements émis par la lampe pouvaient atteindre le col après avoir pénétré à l'intérieur de la préforme.

En effet, les préformes sont généralement maintenues sur le dispositif de transport par un dispositif de préhension formé d'un mandrin qui est engagé à l'intérieur du col de la préforme et qui maintient cette dernière par serrage contre la face interne du col. Dans ce cas, le mandrin de serrage empêche que les rayonnements qui ont pénétré à l'intérieur de la préforme puissent atteindre le col.

Cependant, pour certaines applications, il est apparu intéressant de ne plus saisir les préformes par la face interne du col, par exemple dans le but d'éviter toute contamination bactériologique de cette surface qui est amenée à être au contact du produit avec lequel sera rempli le récipient. Cela permet aussi de supprimer tout risque de rayure de la face interne du col.

Une solution à ce problème, connue du document US-A-4 086 999 qui cause les caractéristiques du préambule de la revendication 1, consiste à prévoir un dispositif de préhension de la bouteille qui coopère avec la face externe du col de la préforme. Cependant, la disposition du dispositif décrit dans ce document conduit à ce que les rayonnements qui ont pénétré à l'intérieur de la préforme peuvent venir chauffer le col, ce que l'on souhaite à tout prix éviter. Ce problème se pose avec une acuité toute particulière lorsque le récipient que l'on fabrique est un récipient comportant un col de grand diamètre, par exemple de l'ordre de 80 millimètres. La section de passage offerte aux rayonnements à l'intérieur de la préforme est alors particulièrement importante.

L'invention a donc pour but de proposer une nouvelle conception du dispositif de préhension de la préforme qui permette de protéger au mieux le col de la préforme, notamment contre un échauffement excessif.

Dans ce but, l'invention propose un dispositif de transport d'une préforme dans le four de conditionnement thermique d'une machine de soufflage de récipients en matériau thermoplastique, du type dans lequel la préforme est obtenue par moulage par injection et comporte, à une extrémité axiale supérieure de son corps, un col tubulaire qui est injecté directement à sa forme définitive, et du type dans lequel la préforme est maintenue sur le dispositif de transport par un dispositif de préhension, qui comporte des griffes de préhension qui enserrent une face externe du col pour maintenir la préforme et qui comporte un noyau interne qui pénètre axialement à l'intérieur du col et présente une face transversale inférieure, caractérisé en ce que, lorsque la préforme est en place sur le dispositif de préhension, ladite face transversale inférieure est située axialement sensiblement au niveau de la limite entre le col et le corps de la préforme et en ce que ladite face transversale inférieure du noyau forme une surface réfléchissante pour l'énergie de chauffage fournie par le four ;

Selon d'autres caractéristiques de l'invention :
- le diamètre du noyau est sensiblement égal mais inférieur au diamètre interne du col de la préforme ;
- le noyau se prolonge vers le haut sous la forme d'un radiateur qui permet de dissiper la chaleur absorbée par le noyau ;
- les griffes de préhension sont réalisées sous la forme d'une cloche ouverte vers le bas, à l'intérieur de laquelle le col de la préforme est engagé axialement, la cloche étant pourvue d'une série de fentes radiales qui sont réparties angulairement de manière à délimiter, entre deux fentes successives, une griffe de préhension déformable radialement de manière élastique ;
- la cloche est formée d'une plaque transversale supérieure circulaire depuis laquelle une jupe tubulaire s'étend axialement vers le bas, le diamètre intérieur de la jupe étant, sur partie au moins de sa longueur, de diamètre inférieur au diamètre externe du col de manière que les griffes s'engagent sur le col en le serrant radialement ;
- la cloche est réalisée en matière plastique ;
- il comporte un ressort circulaire qui entoure la cloche au niveau de l'extrémité inférieure des griffes pour les rappeler radialement vers l'intérieur ;
- le dispositif de préhension est monté à rotation autour de son axe sur le dispositif de transport lequel porte aussi des moyens d'éjection permettant de désolidariser la préforme du dispositif de préhension, les moyens d'éjection sont agencés au-dessus du dispositif de préhension et comportent au moins un doigt qui s'étend axialement vers le bas, et il est prévu des moyens de déplacement axial relatif du dispositif de préhension et des moyens d'éjection de telle sorte que, lors d'une course relative d'éjection, le doigt d'éjection vient en appui contre la préforme afin de la déplacer axialement vers le bas par rapport au dispositif de préhension ;
- le dispositif de préhension est monté mobile axialement sur le dispositif de transport et les moyens d'éjection sont fixes axialement mais mobiles en rotation par rapport au dispositif de transport ;
- lors d'une course relative d'éjection, le doigt d'éjection traverse un orifice de la plaque supérieure de la cloche de préhension et est reçu dans un évidement aménagé à la périphérie du noyau.

L'invention concerne aussi un four de conditionnement thermique pour une installation de soufflage de récipients en matériau thermoplastique, caractérisé en ce qu'il comporte un dispositif de transport incorporant l'une quelconque des caractéristiques précédentes.

D'autres caractéristiques et avantages de l'invention apparaîtront à la lecture de la description détaillée qui suit, ainsi que dans les dessins annexés dans lesquels :
- la figure 1 est une vue schématique en perspective illustrant un dispositif de préhension et des moyens d'éjection d'une préforme conformes aux enseignements de l'invention ;
- la figure 2 est une vue en coupe axiale d'un dispositif de transport de préforme conforme à l'invention ; et
- la figure 3 est une vue similaire à celle de la figure 2 dans laquelle le dispositif de transport est illustré après l'éjection de la préforme.

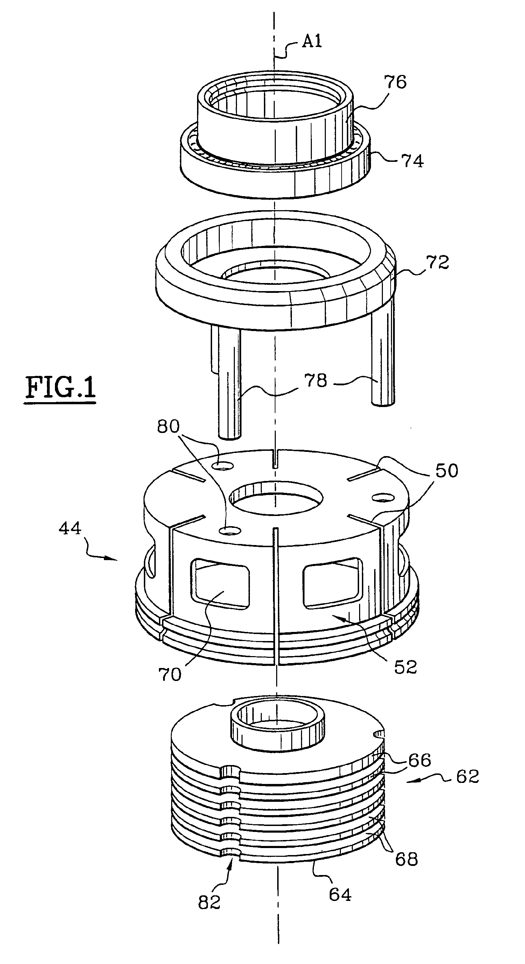

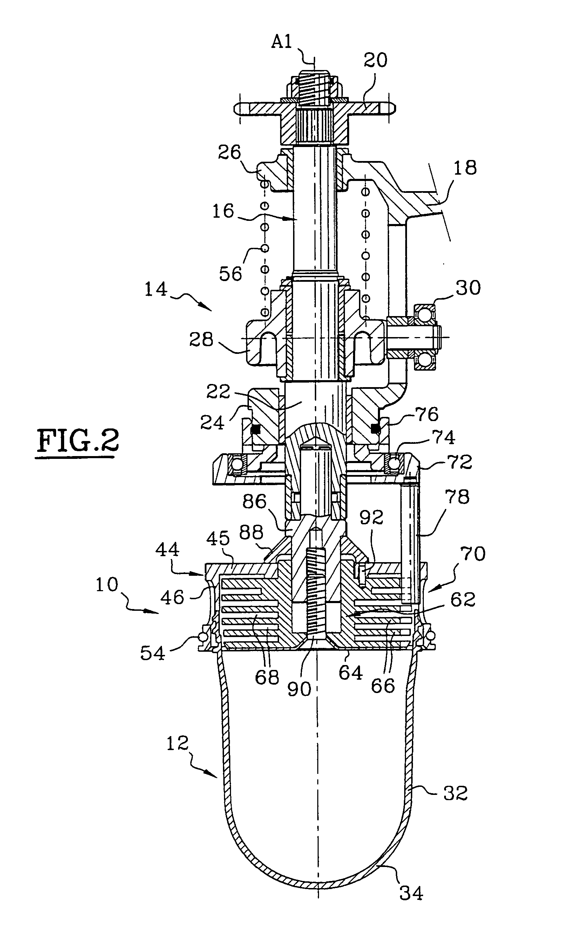

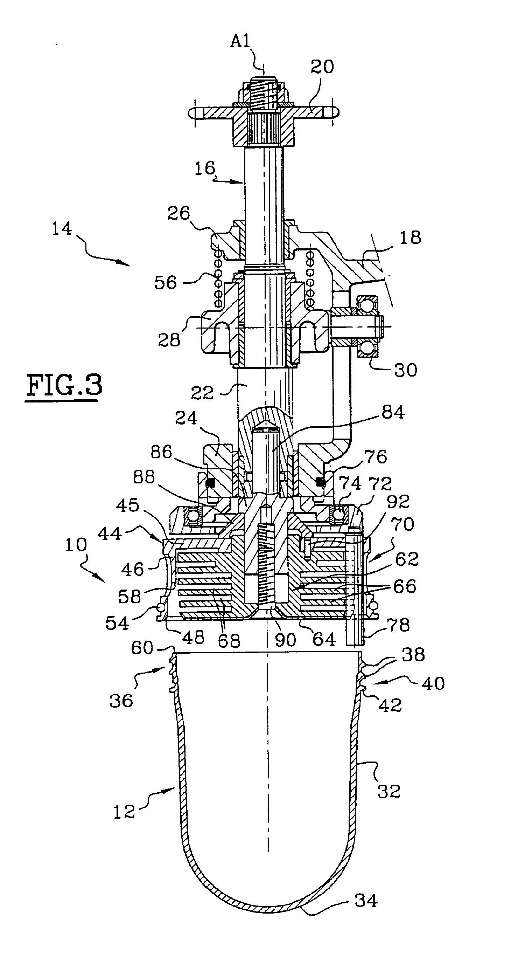

On a représenté sur la figure 1 un dispositif 10 de préhension d'une préforme 12. Ce dispositif est destiné à être porté par un dispositif 14 de transport de la préforme dont un exemple de réalisation est illustré aux figures 2 et 3.

Le dispositif de transport est destiné à assurer la circulation de la préforme 12 à l'intérieur d'un four de conditionnement thermique en vue de permettre le moulage par étirage-soufflage de la préforme pour obtenir un récipient, par exemple un pot ou une bouteille. L'invention trouvera notamment application dans les installations de soufflage de récipients en polyéthylène terephtalate (PET) dans lesquelles des préformes préalablement moulées par injection sont alimentées dans un four de conditionnement thermique avant d'être transférées vers la machine de soufflage proprement dite.

Dans une telle installation, le four est par exemple pourvu d'une chaîne comportant une série de maillons qui sont articulés entre eux et qui sont pourvus chacun de moyens pour porter une préforme. La chaîne tourne à l'intérieur du four en circuit fermé et il est prévu, en entrée de four, des moyens de chargement de la préforme sur un maillon de transport et, en sortie de four, de moyens de déchargement de la préforme.

Le dispositif de transport au sens de l'invention peut donc prendre la forme d'un maillon d'une telle chaîne, mais il peut aussi être réalisé de toute autre manière connue.

Le dispositif 14 de transport est donc apte à faire circuler la préforme 11 à l'intérieur du four selon une trajectoire déterminée, le long de laquelle la préforme défile devant des moyens de chauffage tels que des lampes à infrarouge.

Pour assurer une bonne homogénéité du chauffage du corps de la préforme, il est connu qu'il est préférable de prévoir que la préforme soit entraînée en rotation autour de son axe A1 tout au long de son trajet devant les moyens de chauffage. A cet effet, le dispositif de préhension 10 de la préforme 12 est porté par un arbre 16 d'axe A1 qui est monté à rotation autour de l'axe A1 sur une platine 18 du dispositif de transport 14. L'arbre 16 porte aussi une roue dentée 20 qui est susceptible de coopérer avec une crémaillère fixe (non représentée) agencée le long du parcours de la préforme 12 dans le four. Ainsi, lorsque la platine 18 suit sa trajectoire dans le four, la roue 20 engrène avec la crémaillère et provoque la rotation de l'arbre 16 et donc celle du dispositif de préhension 10.

On le verra par la suite, l'arbre 16 est aussi mobile en translation selon l'axe A1 par rapport à la platine 18.

Pour la clarté de la description qui suit, on utilisera des notions telles que haut, bas, inférieur, supérieur, etc.., en référence à la disposition des éléments tels que représentés sur les figures 1 à 3. Cependant, ces notions ne doivent pas être interprétées comme étant des limitations à la portée de l'invention, d'autant plus que l'on connaît des chaînes de transport qui, après la préhension de la préforme orientée col en haut, permettent un retournement du maillon de manière que la préforme circule col en bas devant les moyens de chauffage, avant d'être retournée de nouveau pour son éjection.

Ainsi, l'arbre 16 porte à son extrémité axiale supérieure la roue dentée 20, à son extrémité inférieure le dispositif de préhension 10, et il comporte un tronçon central 22 qui est guidé par deux paliers, inférieur 24 et supérieur 26, de la platine 18.

Pour la commande des déplacements axiaux de l'arbre 16, il est prévu une bague de commande 28 qui est solidaire axialement de l'arbre 16 qui est montée mobile sur l'arbre 16 en rotation autour de l'axe A1. La bague 28 est montée sur le tronçon central 22 de l'arbre 16. Elle peut donc se déplacer axialement, avec l'arbre 16, entre les deux paliers 24, 26 mais elle est immobilisée en rotation autour de l'axe A1 par rapport à la platine 18. La bague 28 porte un galet 30 qui est susceptible de coopérer avec des rampes inclinée fixes (non représentées) du four pour provoquer le déplacement de l'arbre 16 entre une position basse illustrée à la figure 2 et une position haute illustre à la figure 3.

La préforme 12 qui est illustrée sur les figures 2 et 3 présente de manière classique un corps 32. Dans l'exemple, le corps 32 est sensiblement tubulaire d'axe A1 et il est fermé à son extrémité inférieure par un fond 34 sensiblement hémisphérique. L'extrémité supérieure de la préforme 12 est constituée par un col tubulaire 36 d'axe A1 qui porte sur sa face externe des moyens permettant la mise en place ultérieure d'un bouchon, ces moyens étant en l'occurrence constitués de filets 38 qui forment un pas de vis. En dessous des filets 38, sensiblement à la limite entre le col 36 et le corps 32 de la préforme 12, une collerette annulaire 40 qui est en relief radialement vers l'extérieur. La face inférieure 42 de cette collerette 40 est souvent utilisée pour assurer les transferts de la préforme 12 ou du récipient final. En effet, le col 36 est moulé par injection directement à sa forme définitive et n'est pas transformé au cours de l'opération de soufflage. De la sorte, la collerette constitue une surface de référence permettant une préhension aisée.

Selon un premier aspect de l'invention, le dispositif de préhension 10 porté par l'arbre 16 est prévu pour saisir et maintenir la préforme par contact avec la face externe du col 36.

A cet effet, le dispositif de préhension 16 comporte une cloche de préhension 44 qui présente une plaque supérieure 45 circulaire et une jupe cylindrique 46 qui s'étend axialement vers le bas depuis le bord périphérique de la plaque 45. La cloche 44 définit donc un espace cylindrique ouvert vers le bas, le bord inférieur de la jupe 46 étant pourvu d'un chanfrein intérieur 48 pour faciliter l'engagement du col de la préforme dans ledit espace.

La cloche 44 est fendue radialement par six fentes 50 réparties angulairement autour de l'axe A1. Bien entendu, le nombre de fentes n'est qu'indicatif. Chaque fente 50 s'étend radialement sur environ le tiers externe de la plaque 45 et axialement sur toute la hauteur de la jupe 46. Ainsi, entre deux fentes 50, il est délimité une griffe 52 déformable élastiquement, dont l'extrémité libre, formée par le bord inférieur de la jupe 46, peut se déplacer radialement par rapport à l'axe A1.

Ainsi, la cloche 44 est destinée à venir s'abaisser axialement pour entourer le col 36 de la préforme, les griffes 52 venant enserrer élastiquement la face externe du col. On peut voir que la face interne de l'extrémité libre des griffes 52 est lisse, de sorte que la préforme 12 est saisie et maintenue par simple serrage radial. En l'occurrence, les griffes 52 saisissent donc la préforme en coopérant avec le sommet des filets 38.

La cloche 44 est par exemple réalisée en un matériau plastique de type polyacetal. Dans ce cas, pour renforcer l'effort de serrage, on peut prévoir un ressort annulaire 54 qui enserre la cloche 44 au niveau du bord inférieur de la jupe 46 pour forcer l'extrémité libre des griffes 52 radialement vers l'intérieur. Dans l'exemple proposé, le ressort 54 est reçu dans une gorge circulaire formée sur la face externe de la jupe 46, au niveau de son bord inférieur.

Les griffes de préhension telles qu'elles viennent d'être décrites ne représentent qu'un mode préféré de réalisation de l'invention. En effet, on peut envisager que les moyens qui permettent d'agripper la préforme par la surface externe du col soient réalisés différemment. On peut notamment les réaliser sous la forme d'une pince à griffes articulées, ou sous la forme d'un mandrin à mors concentriques.

Dans le dispositif de transport 14 qui est illustré, le mouvement de "descente" de l'arbre 16 et du dispositif de préhension 10 est provoqué par un ressort de compression 56 qui est agencé autour de l'arbre, en appui vers le haut contre le palier supérieur 26 et vers le bas contre la bague de commande 28. Le galet 30 a essentiellement pour rôle d'assurer la "remontée" de l'arbre 16, à l'encontre de l'action du ressort 56. Il peut aussi être utilisé pour réguler la vitesse du mouvement de descente de l'arbre 16 imposé par l'arbre 16, par exemple en coopérant avec une rampe profilée.

Lors du chargement de la préforme 12, celle-ci est amenée sous le dispositif de transport 14 dans lequel le dispositif de préhension 10 est en position haute. La préforme est alors par exemple en appui vers le bas sur des rails de guidage par l'intermédiaire de sa collerette 40. Lorsque le ressort 56 sollicite l'arbre 16 vers le bas, la cloche 44 s'engage sur le col 36 de la préforme jusqu'à ce qu'un rebord annulaire interne 58, formé sur la face interne de la jupe 46, vienne en appui contre le bord supérieur 60 du col 36. Ainsi, lorsque la préforme 12 est saisie, sa position axiale est définie avec précision.

Selon un deuxième aspect de l'invention, le dispositif de préhension 14 comporte des moyens pour limiter l'échauffement du col 36, ces moyens étant constitués par un noyau interne 62 qui est solidaire de la cloche 44, qui est disposé à l'intérieur de l'espace qu'elle délimite, et qui est prévu pour être reçu à l'intérieur du col 36 de la préforme. Selon l'invention, il présente une face inférieure transversale 64 qui est perpendiculaire à l'axe A1 et qui se trouve agencée, lorsque la préforme est en place sur le dispositif de préhension, sensiblement au niveau de la limite entre le col 36 et le corps de la préforme. En l'occurrence, la face inférieure 64 est agencée au même niveau que le bord inférieur de la jupe 46 de la cloche 44 et que la collerette 40 de la préforme 12.

Dans l'exemple proposé, le noyau 62 présente une forme telle qu'il épouse au plus près la face interne du col 36, sans toutefois venir au contact de celle-ci. Cependant, on comprendra que la première fonction essentielle du noyau est de former un obstacle aux rayonnements. Il pourrait donc être constitué d'une simple tige axiale portant à son extrémité inférieure une plaque transversale.

De préférence, la face transversale inférieure du noyau 62 est apte à réfléchir les rayonnements incidents. Toutefois, dans certaines applications, on peut prévoir au contraire que le noyau soit prévu pour absorber ces rayonnements au moins partiellement et qu'il soit prévu de moyens pour évacuer l'énergie ainsi emmagasinée.

Dans l'exemple proposé, la face transversale inférieure 64 est réalisée sous la forme d'un réflecteur rapporté dont la face tournée vers le bas est polie pour augmenter son pouvoir de réflexion. Cependant, la face intérieure pourrait aussi faire partie intégrante du corps du noyau. A titre d'exemple, le réflecteur et le corps du noyau sont réalisés tous les deux en aluminium, pour en limiter le poids.

Selon un autre aspect de l'invention, le corps du noyau 62 est muni d'ailettes 66 pour faciliter la dissipation de la chaleur qui est absorbée par la face inférieure 64 en dépit de son caractère réfléchissant. Selon l'exemple proposé, ces ailettes 66 s'étendent dans des plans perpendiculaires à l'axe A1 et elles sont séparées axialement l'une de l'autre par des gorges annulaires 68 d'axe A1 qui s'étendent radialement vers l'intérieur sur plus de la moitié du rayon du noyau 68, depuis la périphérie externe de celui-ci.

Pour évacuer la chaleur au niveau des ailettes 66, les griffes 52 sont munies de fenêtres 70 qui sont découpées dans la jupe tubulaire 46 et qui permettent d'organiser une circulation d'air entre les ailettes.

Avantageusement, on utilisera pour cela le dispositif de circulation d'air dont est généralement muni un four de ce type pour assurer le refroidissement des lampes à infrarouges. Une partie du flux d'air du système de ventilation du four est alors canalisée pour assurer le refroidissement du noyau de chacun des dispositifs de transport.

Un exemple d'un tel système de ventilation est décrit dans le document FR-A-2.561.986. Dans un tel système, il est créé dans le four une dépression de manière à faire entrer de l'air frais dans le four au travers de l'ouverture délimitée par les rampes de protection qui évitent que les rayonnements n'atteignent la face externe du col. Aussi, dans ce système, l'air frais aspiré vers le four tend à circuler autour du col des préformes et pourra donc, grâce au dispositif selon l'invention, participer au refroidissement du noyau 62.

Toutefois, on peut aussi prévoir de disposer, le long du parcours suivi par les préformes dans le four, des buses de projection d'air frais dirigées spécifiquement vers le dispositif de préhension 10 de chacun des maillons de transport.

Le noyau 62 permet donc d'éviter que les rayonnements qui pénètrent à l'intérieur de la préforme puissent venir frapper le col. Au contraire, la face inférieure 64 tend à les réfléchir. De plus, en assurant le refroidissement du noyau, on évite que sa température s'élève au point qu'il serait susceptible de chauffer le col. Ce risque est d'autant plus grand que le diamètre du col est élevé, même s'il faut noter que le noyau, n'étant pas en contact avec la préforme, ne peut chauffer le col que par convection ou par rayonnement, mais pas par conduction.

Par ailleurs, le dispositif 14 de transport de préformes selon l'invention comporte des moyens qui permettent, en sortie de four, d'éjecter une préforme qui est maintenue par le dispositif de préhension.

A cet effet, il est prévu un dispositif d'éjection qui comporte une couronne 72 qui est munie de trois doigts cylindriques 78 répartis à 120° sur un cercle dont le diamètre est sensiblement identique, mais légèrement inférieur, au diamètre du col de la préforme. Les doigts 78 s'étendent axialement vers le bas et ils traversent ainsi des orifices 80 aménagés dans la plaque supérieure 45 de la cloche 44 et ils sont partiellement reçus dans des évidements 82 formés dans la face périphérique du noyau. La couronne 72 qui porte les doigts 78 est montée à rotation autour de l'axe A1, grâce à un roulement à bille 74, sur un support 76 lui-même fixé au palier inférieur 24 de la platine 18. Le dispositif d'éjection est donc fixe axialement par rapport à la platine 18.

Lorsque l'arbre 16 et le dispositif de préhension 10 sont en position basse tels qu'illustrés à la figure 2, l'extrémité inférieure des doigts 78 est agencée au-dessus du niveau du rebord 58 de la jupe 46 qui forme une butée pour le col 36 de la préforme. Aussi, les doigts 78 n'interfèrent alors pas avec la préforme.

Au contraire, lorsque le galet 30 provoque la remontée du dispositif de préhension, et donc de la préforme, le bord supérieur 60 du col de la préforme vient au contact des doigts 78 qui sont fixes axialement. De la sorte, le dispositif de préhension continue de remonter, mais pas la préforme, jusqu'à ce que le col 36 échappe des griffes 52, la préforme se trouvant alors libérée comme on peut le voir à la figure 3.

On remarquera que les doigts 78 restent constamment engagés à l'intérieur des orifices 80 de la cloche 44 et des évidements 82 du noyau 62. Aussi, il est important que la couronne 72 qui les porte soit mobile en rotation pour ne pas qu'ils s'opposent à la rotation du dispositif de préhension.

Avantageusement, le dispositif de préhension est monté sur l'arbre 16 par un dispositif à baïonnette connu par ailleurs. Le dispositif de préhension comporte ainsi une âme 84 dont une partie supérieure forme un culot à baïonnette destiné à être reçu dans une douille correspondante formée à l'extrémité inférieure de l'arbre 16, et dont une partie inférieure, munie d'un épaulement 86, permet le montage par empilement axial d'un cône d'appui 88, de la cloche 44 et du noyau 62. Une vis 90 d'axe A1, dont la tête prend appui contre la face inférieure de l'âme 84, est vissée vers le haut dans la partie inférieure de l'âme 84.

L'empilage axial est tel que le noyau 62 est en appui contre la plaque supérieure 45 de la cloche 44, laquelle est à son tour en appui, par l'intermédiaire du cône 88, contre l'épaulement 86.

Au contraire, le noyau 62 est centré selon l'axe A1 directement sur la partie inférieure de l'âme 84 et la cloche 44 est centrée sur le noyau. Par ailleurs, la cloche 44 et le noyau 62 sont indexés angulairement l'un par rapport à l'autre par un pion 92 qui permet de s'assurer que les orifices 80 de la cloche 44 sont alignés avec les évidements 82 du noyau 62.

On notera que le montage à baïonnette du dispositif de préhension 10 permet d'en effectuer le montage et le démontage de manière très rapide. Cela permet de prévoir un changement du type des préformes traitées dans le four, notamment lorsque l'on souhaite pouvoir traiter, avec le même four, des préformes présentant des diamètres de col différents. Or, lors d'un tel changement, il faut changer tous les dispositifs de préhension de la chaîne de transport, ce qui peut représenter plus de deux cents unités. On conçoit donc aisément l'intérêt d'une possibilité de montage/démontage rapide du dispositif de préhension. Dans le même but, on peut voir sur les figures 2 et 3 que le dispositif d'éjection présente un support 76 qui est fixé sur la platine 18 par simple emboîtement élastique.

## Revendications

1. Dispositif de transport d'une préforme dans le four de conditionnement thermique d'une installation de soufflage de récipients en matériau thermoplastique, du type dans lequel la préforme (12) est obtenue par moulage par injection et comporte, à une extrémité axiale supérieure de son corps (32), un col tubulaire (36) qui est injecté directement à sa forme définitive, et du type dans lequel la préforme (12) est maintenue sur le dispositif de transport (14) par un dispositif de préhension (10), qui comporte des griffes de préhension (52) qui enserrent une face externe du col (36) pour maintenir la préforme (12) et qui comporte un noyau interne (62) qui pénètre axialement à l'intérieur du col (36) et présente une face transversale inférieure (64),
**caractérisé en ce que**, lorsque la préforme (12) est en place sur le dispositif de préhension (10), ladite face transversale inférieure (64) du noyau (62) est située axialement sensiblement au niveau de la limite entre le col (36) et le corps (32) de la préforme (12), et **en ce que** ladite face transversale inférieure (64) du noyau (62) forme une surface réfléchissante pour l'énergie de chauffage fournie par le four.

2. Dispositif de transport selon la revendication 1, **caractérisé en ce que** le diamètre du noyau (62) est sensiblement égal mais inférieur au diamètre interne du col (36) de la préforme (12).

3. Dispositif de transport selon l'une quelconque des revendications précédentes, **caractérisé en ce que** le noyau (62) se prolonge vers le haut sous la forme d'un radiateur (66, 68) qui permet de dissiper la chaleur absorbée par le noyau (62).

4. Dispositif de transport selon l'une quelconque des revendications précédentes, **caractérisé en ce que** les griffes de préhension (52) sont réalisées sous la forme d'une cloche (44) ouverte vers le bas, à l'intérieur de laquelle le col (36) de la préforme (12) est engagé axialement, la cloche (44) étant pourvue d'une série de fentes radiales (50) qui sont réparties angulairement de manière à délimiter, entre deux fentes successives, une griffe de préhension (52) déformable radialement de manière élastique.

5. Dispositif de transport selon la revendication 4, **caractérisé en ce que** la cloche (44) est formée d'une plaque transversale supérieure (45) circulaire depuis laquelle une jupe tubulaire (46) s'étend axialement vers le bas, le diamètre intérieur de la jupe (46) étant, sur partie au moins de sa longueur, de diamètre inférieur au diamètre externe du col (36) de manière que les griffes (52) s'engagent sur le col (36) en le serrant radialement.

6. Dispositif de transport selon l'une des revendications 4 ou 5, **caractérisé en ce que** la cloche (44) est réalisée en matière plastique.

7. Dispositif de transport selon l'une quelconque des revendications 4 à 6, **caractérisé en ce qu'**il comporte un ressort circulaire (54) qui entoure la cloche (44) au niveau de l'extrémité inférieure des griffes (52) pour les rappeler radialement vers l'intérieur.

8. Dispositif de transport selon l'une quelconque des revendications précédentes, **caractérisé en ce que** le dispositif de préhension (10) est monté à rotation autour de son axe (A1) sur le dispositif de transport (14, 18), lequel porte aussi des moyens d'éjection permettant de désolidariser la préforme (12) du dispositif de préhension (10), **en ce que** les moyens d'éjection sont agencés au-dessus du dispositif de préhension (10) et comportent au moins un doigt (78) qui s'étend axialement vers le bas, et **en ce qu'**il est prévu des moyens (16, 28, 30) de déplacement axial relatif du dispositif de préhension (10) et des moyens d'éjection (78) de telle sorte que, lors d'une course relative d'éjection, le doigt d'éjection (78) vient en appui contre la préforme (12) afin de la déplacer axialement vers le bas par rapport au dispositif de préhension (10).

9. Dispositif de transport selon la revendication 8, **caractérisé en ce que** le dispositif de préhension (10) est monté mobile axialement sur le dispositif de transport (14, 18) et **en ce que** les moyens d'éjection (78) sont fixes axialement mais mobiles en rotation par rapport au dispositif de transport (14, 18).

10. Dispositif de transport selon l'une des revendications 8 ou 9 prise en combinaison avec la revendication 5, **caractérisé en ce que**, lors d'une course relative d'éjection, le doigt d'éjection (78) traverse un orifice (80) de la plaque supérieure (45) de la cloche de préhension (44) et est reçu dans un évidement (82) aménagé à la périphérie du noyau (62).

11. Four de conditionnement thermique pour une installation de soufflage de récipients en matériau thermoplastique, **caractérisé en ce qu'**il comporte un dispositif de transport conforme à l'une quelconque des revendications précédentes.

## Claims

1. Carrying device for a preform in the thermal conditioning oven of a blow-moulding facility for thermoplastic containers, of the type in which the preform (12) is obtained by injection-moulding and comprises, at one upper axial end of its body (32), a tubular neck (36) which is directly injection-moulded into its definitive shape, and of the type in which the preform (12) is held on the carrying device (14) by a gripping device (10), which comprises gripping jaws (52) which grip an outer surface of the neck (36) to hold the preform (12) and which comprises an inner core (62) which penetrates axially inside the neck (36) and has a lower transverse surface (64),
**characterized in that** when the preform (12) is in position on the gripping device (10), said lower transverse surface (64) of the core (62) is axially located substantially in the region of the boundary between the neck (36) and the body (32) of the preform (12), and **in that** said lower transverse surface (64) of the core (62) forms a reflective surface for the heating power provided by the oven.

2. Carrying device according to Claim 1, **characterized in that** the diameter of the core (62) is substantially equal to but less than the internal diameter of the neck (36) of the preform (12).

3. Carrying device according to any one of the preceding claims, **characterized in that** the core (62) is extended upwards in the form of a heat sink (66, 68) which allows the heat absorbed by the core (62) to be dissipated.

4. Carrying device according to any one of the preceding claims, **characterized in that** the gripping jaws (52) are produced in the shape of a bell (44) which is open towards the bottom, inside of which the neck (36) of the preform (12) is axially engaged, the bell (44) being provided with a series of radial slots (50) which are distributed at an angle so as to define, between two successive slots, a gripping jaw (52) which is radially deformable in a resilient manner.

5. Carrying device according to Claim 4, **characterized in that** the bell (44) is formed by an upper circular transverse plate (45) from which a tubular skirt (46) extends axially downwards, the internal diameter of the skirt (46) having, over at least one part of its length, a diameter which is less than the external diameter of the neck (36) so that the jaws (52) are engaged on the neck (36) by gripping said neck radially.

6. Carrying device according to one of Claims 4 or 5, **characterized in that** the bell (44) is made of plastics material.

7. Carrying device according to any one of Claims 4 to 6, **characterized in that** it comprises a circular spring (54) which surrounds the bell (44) in the region of the lower end of the jaws (52) to return said jaws radially towards the inside.

8. Carrying device according to any one of the preceding claims, **characterized in that** the gripping device (10) is rotatably mounted about its axis (A1) on the carrying device (14, 18) which also carries ejection means allowing the preform (12) to be released from the gripping device (10), **in that** the ejection means are arranged above the gripping device (10) and comprise at least one finger (78) which extends axially downwards, and **in that** means (16, 28, 30) for relative axial displacement of the gripping device (10) and ejection means (78) are provided such that during a relative ejection path, the ejection finger (78) bears against the preform (12) in order to displace said preform axially downwards relative to the gripping device (10).

9. Carrying device according to Claim 8, **characterized in that** the gripping device (10) is mounted axially mobile on the carrying device (14, 18) and **in that** the ejection means (78) are axially fixed but mobile in rotation relative to the carrying device (14, 18).

10. Carrying device according to one of Claims 8 or 9, taken in combination with Claim 5, **characterized in that**, during a relative ejection path, the ejection finger (78) passes through an orifice (80) of the upper plate (45) of the gripping bell (44) and is received in a recess (82) made in the periphery of the core (62).

11. Thermal conditioning oven for a blow-moulding facility for thermoplastic containers, **characterized in that** it comprises a carrying device according to any one of the preceding claims.

## Patentansprüche

1. Fördervorrichtung für einen Rohling in dem thermischen Konditionierungsofen einer Aufblasanlage für Behälter aus thermoplastischem Material des Typs, bei dem der Rohling (12) durch Spritzguss erhalten wird und an einem oberen axialen Ende seines Körpers (32) einen röhrenförmigen Hals (36) umfasst, der direkt zu seiner endgültigen Form gespritzt wird, und des Typs, bei dem der Rohling (12) an der Fördervorrichtung (14) durch eine Greifvorrichtung (10) gehalten wird, die Greifklauen (52) umfasst, die eine Außenseite des Halses (36) umschließen, um den Rohling (12) zu halten, und die einen inneren Kern (62) umfasst, der axial in das Innere des Halses (36) eindringt und eine untere transversale Fläche (64) aufweist,
**dadurch gekennzeichnet, dass** diese untere transversale Fläche (64) des Kerns (62) axial im Wesentlichen auf der Höhe der Grenze zwischen dem Hals (36) und dem Körper (32) des Rohlings (12) liegt, wenn der Rohling (12) an der Greifvorrichtung (10) angeordnet ist und dass die untere transversale Fläche (64) des Kerns (62) eine Abstrahlungsfläche für die vom Ofen zugeführte Heizenergie formt.

2. Fördervorrichtung nach Anspruch 1, **dadurch gekennzeichnet, dass** der Durchmesser des Kerns (62) im Wesentlichen gleich, aber kleiner als der Innendurchmesser des Halses (36) des Rohlings (12) ist.

3. Fördervorrichtung nach einem der vorherigen Ansprüche, **dadurch gekennzeichnet, dass** der Kern (62) in Form eines Wärmeableiters (66, 68) nach oben hin verlängert ist, der es erlaubt, die vom Kern (62) absorbierte Wärme abzuführen.

4. Fördervorrichtung nach einem der vorherigen Ansprüche, **dadurch gekennzeichnet, dass** die Greifklauen (52) in Form einer nach unten hin offenen Glocke (44) ausgeführt sind, in deren Inneres der Hals (36) des Rohlings (12) axial eingeführt wird, wobei die Glocke (44) mit einer Reihe von radialen Schlitzen (50) versehen ist, die winkelmäßig so verteilt sind, dass sie zwischen zwei aufeinanderfolgenden Schlitzen eine Greifklaue (52) begrenzen, die auf elastische Weise radial verformbar ist.

5. Fördervorrichtung nach Anspruch 4, **dadurch gekennzeichnet, dass** die Glocke (44) aus einer kreisrunden oberen transversalen Platte (45) geformt ist, von der aus eine röhrenförmige Schürze (46) axial nach unten verläuft, wobei der Innendurchmesser der Schürze (46) mindestens auf einem Teil ihrer Länge ein Durchmesser ist, der kleiner als der Außendurchmesser des Halses (36) ist, derart, dass die Klauen (52) auf den Hals (36) gesteckt werden können, wobei sie ihn radial umschließen.

6. Fördervorrichtung nach einem der Ansprüche 4 oder 5, **dadurch gekennzeichnet, dass** die Glocke (44) aus Kunststoff hergestellt ist.

7. Fördervorrichtung nach einem der Ansprüche 4 bis 6, **dadurch gekennzeichnet, dass** sie eine kreisrunde Feder (54) umfasst, die die Glocke (44) auf der Höhe des unteren Endes der Klauen (52) umgibt, um sie radial nach innen zurückzustellen.

8. Fördervorrichtung nach einem der vorherigen Ansprüche, **dadurch gekennzeichnet, dass** die Greifvorrichtung (10) um ihre Achse (A1) drehbar an der Fördervorrichtung (14, 18) befestigt ist, die auch Auswurfmittel umfasst, die die Lösung des Rohlings (12) von der Greifvorrichtung (10) erlauben, dass die Auswurfmittel über der Greifvorrichtung (10) angeordnet sind und mindestens einen Finger (78) umfassen, der axial nach unten verläuft, und dass Mittel (16, 28, 30) zur relativen Axialverschiebung der Greifvorrichtung (10) und der Auswurfmittel (78) vorgesehen sind, derart, dass der Auswurffinger (78) während eines relativen Auswurfhubs gegen den Rohling (12) zum Aufliegen kommt, um ihn relativ zur Greifvorrichtung (10) axial nach unten zu verschieben.

9. Fördervorrichtung nach Anspruch 8, **dadurch gekennzeichnet, dass** die Greifvorrichtung (10) axial beweglich an der Fördervorrichtung (14, 18) befestigt ist, und dass die Auswurfmittel (78) zwar axial feststehend, aber in Bezug auf die Fördervorrichtung (14, 18) drehbar sind.

10. Fördervorrichtung nach einem der Ansprüche 8 oder 9 in Verbindung mit Anspruch 5, **dadurch gekennzeichnet, dass** der Auswurffinger (78) während eines relativen Auswurfshubs durch eine Öffnung (80) der oberen Platte (45) der Greifglocke (44) geführt wird und in einer Aussparung (82) aufgenommen wird, die am Umfang des Kerns (62) ausgespart ist.

11. Thermischer Konditionierungsofen für eine Aufblasanlage für Behälter aus thermoplastischem Material, **dadurch gekennzeichnet, dass** er eine Fördervorrichtung nach einem der vorherigen Ansprüche umfasst.
